# EUROPÄISCHE PATENTSCHRIFT

(11) **EP 0 989 048 B1**
(45) Veröffentlichungstag und Bekanntmachung des Hinweises auf die Patenterteilung: **19.02.2003**
(21) Anmeldenummer: 99890302.5
(22) Anmeldetag: 22.09.1999
(51) Int. Cl.: B62D 5/07, F15B 11/17, E02F 9/22, B60R 16/08

(54) **Hydraulisches System für Ackerschlepper und selbstfahrende Arbeitsmaschinen**
Hydraulic system for tractors and self-propelled construction vehicles
Système hydraulique pour les tracteurs et les machines de travail automoteurs

(30) Priorität: 25.09.1998 AT 62498 U
(43) Veröffentlichungstag der Anmeldung: 29.03.2000
(73) Patentinhaber: ZF FRIEDRICHSHAFEN Aktiengesellschaft, 88038 Friedrichshafen (DE)
(72) Erfinder: Vemmer, Friedrich, 4400 Steyr (AT)
(74) Vertreter: Kovac, Werner, Dipl.-Ing.

(56) Entgegenhaltungen:
- EP-A- 0 164 603
- EP-A- 0 314 637
- DE-A- 3 427 436
- US-A- 4 321 793
- US-A- 4 337 620
- KLOTZBÜCHER: "Energieverluste in Hydrauliksystemen von Ackerschleppern" GRUNDL. LANDTECHNIK, Bd. 34, Nr. 6, 1984, Seiten 250-251, XP000863428 Düsseldorf, DE
- PATENT ABSTRACTS OF JAPAN vol. 011, no. 397 (M-655), 25. Dezember 1987 (1987-12-25) & JP 62 164923 A (KOMATSU), 21. Juli 1987 (1987-07-21)

## Beschreibung

Die Erfindung handelt von einem hydraulischen System für Ackerschlepper und selbstfahrende Arbeitsmaschinen mit einer ersten und einer zweiten Verdrängungspumpe konstanten Fördervolumens,
a) wovon die erste über eine erste Druckleitung und ein Lenkventil eine Lenkhydraulik versorgt, wobei der Druck in der ersten Druckleitung über eine im Nebenschluß geschaltete erste lastfühlende Druckwaage gesteuert ist, und
b) wovon die zweite Verdrängungspumpe über eine zweite Druckleitung weitere Verbraucher versorgt, wobei in der zweiten Druckleitung eine im Hauptschluß geschaltete zweite lastfühlende Druckwaage vorgesehen ist, und
c) wobei weiters die beiden lastfühlenden Druckwaagen ein vom Lenkventil ausgesandtes erstes Lastfühlsignal und ein dem Druck stromabwärts der ersten Verdrängungspumpe entsprechendes Drucksignal gegeneinander abwiegen,
d) und wobei die zweite Druckwaage bei Überherrschen des ersten Lastfühlsignales die zweite Druckleitung mit der ersten verbindet.

Hydrauliksysteme für moderne Ackerschlepper müssen nebst Arbeitshydraulik und hydrostatischer Lenkung auch Schmierung und neuerdings auch Steuerung des Fahrgetriebes versorgen. Dabei sind für die beiden ersteren hohe Drücke (150 bis 200 Bar) und für die beiden letzteren konstante Drücke von 3 Bar bzw 20 Bar erforderlich. Der Versorgung dienen entweder Konstantstromsysteme, die mehrere Pumpen mit nur von der Drehzahl abhängigem Fördervolumen ("Konstantpumpen") verwenden, um die verschiedenen Druckniveaus bieten zu können, oder Verstellpumpensysteme. Letztere sind sehr aufwendig und störungsanfällig und brauchen wegen der verschiedenen Druckniveaus auch mehrere Pumpen. Die durch lastfühlende (="load sensing") Steuerung theoretisch mögliche Senkung der Verlustleistungen durch Anpassung an den geforderten Volumenstrom und Druck ist wegen hoher Druckdifferenzen, der nötigen Bereitschaftsdrücke, Reibungs-bzw Drosselverluste, dem für die Verstellpumpe benötigten Steuerölstrom und des erforderlichen Lenkungs-Prioritätsventiles bei weitem nicht realisierbar.

Die Schwierigkeit besteht nicht nur in den verschiedenen Druckniveaus der Verbraucher, sondern vor allem in den stark schwankenden Betriebsbedingungen. So braucht die hydrostatische Lenkung bei Geradeausfahrt nur sehr wenig Drucköl, bei einem Lenkmanöver aber plötzlich sehr viel. Da die Lenkung sicherheitsrelevant ist, muß auch bei niederen Drehzahlen (Motor im Leerlauf) ausreichend Öl von ausreichendem Druck zur Verfügung stehen. Das erfordert um ein Vielfaches überdimensionierte Pumpen, die bei Betriebsdrehzahl blind fordern und führt zu erheblichen Verlustleistungen bzw Wirkungsgradeinbußen. Daher trachtet die Erfindung danach, ohne Verstellpumpen eine wesentliche Senkung der Verlustleistungen zu erreichen.

In dem Zeitschriftenartikel "Energieverluste in Hydrauliksystemen von Ackerschleppern" von KLOTZBÜCHER (Grundl.Landtechnik, Bd34 (1984) Nr.6, Seite 250) wird für ein Hydrauliksystem gemäß dem Oberbegriff des Anspruchs 1 vorgeschlagen, die bei Leerlauf des Antriebsmotors für den Lenkkreis erforderliche Fehlmenge über eine Druckwaage einem anderen Arbeitskreis mit eigener Pumpe zu entnehmen. Offen bleibt dabei, wie die Forderung nach Versorgung des Getriebes mit Schmier- und mit Steueröl bei konstantem und niedererem Druck zu erfüllen ist. Die Getriebeschmierung ist nur von einem Rücklauf aus möglich (was zu unerwünschtem Gegendruck führt), die Arbeitshydraulik ist als gemischtes System mit offener Mitte (="open center") und Lastfühlung (="load sensing") ausgeführt, gegenseitige Beeinflussung von Lenkhydraulik und Arbeitshydraulik ist nicht auszuschließen, und schließlich ist kein getrennter Ölhaushalt möglich.

Es ist daher Ziel der Erfindung, ein Hydrauliksystem vorzuschlagen, das alle genannten Nachteile vermeidet, das somit alle Verbraucher bedarfsgerecht versorgt, bei geringstmöglichem Leistungsverbrauch und mit möglichst geringem technischen Aufwand.

Erfindungsgemäß wird das dadurch erreicht, daß von der ersten Druckleitung eine dritte Druckleitung zur Steuerung des Fahrgetriebes abzweigt, sodaß letztere parallel zur Lenkhydraulik versorgt ist. Somit sind die beiden Verbraucher die normalerweise nur sehr wenig Öl brauchen, an dieselbe Druckleitung angeschlossen und die erste Pumpe kann sehr klein gehalten werden. Weiters dadurch, daß die zweite Druckleitung das Fahrgetriebe mit Schmier- und Kühlöl versorgt, wozu eine gleichmäßig große Ölmenge bei niederem Druck benötigt wird. Schließlich dadurch, daß der Rücklauf der Lenkhydraulik stromabwärts der zweiten Druckwaage in die zweite Druckleitung mündet, sodaß immer ausreichend Schmier- und Kühlöl zur Verfügung steht. Dadurch erst ist im Zusammenwirken mit den beiden lastfühlenden Druckwaagen e) und f) insgesamt eine erhebliche Leistungsersparnis erreichbar. Nebstbei ist es dadurch nicht nötig, Öl von der Arbeitshydraulik abzuzweigen, was getrennte Hydrauliksysteme ermöglicht. Das ist unter gewissen Umständen erwünscht.

Eine weitere Senkung der Leistungsverluste wird dadurch erreicht, daß die erste Verdrängungspumpe für ein wesentlich kleineres Fördervolumen als die zweite Verdrängungspumpe und daß die zweite Druckwaage für eine große Durchflußmenge ausgelegt ist (Anspruch 2). Ersteres ist möglich, weil durch die Anordnung der zweiten Druckwaage schnell und genau Öl aus der zweiten Druckleitung geliefert wird, zweiteres reduziert die Drosselverluste in der stark und mit niederem Druck durchströmten zweiten Druckleitung.

In Weiterbildung der Erfindung wird nebst dem vom Lenkventil ausgesandten ersten Lastfühlsignal ein dem Druck in der dritten Druckleitung entsprechendes zweites Lastfühlsignal über ein Maximumauswahlventil der zweiten Druckwaage zugeleitet (Anspruch 3). Dadurch wird der Mindestdruck der Getriebesteuerung auch dann nicht unterschritten, wenn der Lenkungsdruck unter diesen Mindestdruck absinkt.

Soll ein Ölfilter im Hauptstrom bei geringen Verlusten realisiert werden, ist in der ersten Druckleitung anschließend an die erste Verdrängungspumpe ein Ölfilter vorgesehen (Anspruch 4), weil dann nur der kleine Volumenstrom der ersten Pumpe durch das Filter muß. Soll auch noch ein Feinstfilter eingesetzt werden, ist es vorteilhaft, in der dritten Druckleitung zwischen der Abzweigung von der ersten Druckleitung und der Stelle an der das zweite Lastfühlsignal abgenommen wird, ein Feinstfilter und ein Druckbegrenzungsventil vorzusehen (Anspruch 5). Das Feinstfilter kann in Strömungsrichtung vor oder hinter dem Druckminderventil angeordnet sein.

Wenn für die Arbeitshydraulik kein getrennter Ölhaushalt erforderlich ist und es auf minimale Leistungsverluste ankommt, besteht eine bevorzugten Ausführungsform darin, daß
a) von der zweiten Druckleitung stromabwärts der zweiten Druckwaage eine vierte Druckleitung abzweigt, die eine Arbeitshydraulik versorgt; beziehungsweise an der zweiten Druckleitung statt der Schmierung eine lastfühlende Arbeitshydraulik angeschlossen ist,
b) in der zweiten Druckleitung stromabwärts der Abzweigung der vierten Druckleitung eine dritte lastfühlende Druckwaage vorgesehen ist,
c) eine dritte Verdrängungspumpe konstanten Fördervolumens über eine fünfte Druckleitung und eine vierte lastfühlende Druckwaage, von dieser gesteuert, entweder mit der zweiten oder mit der vierten Druckleitung verbindbar ist,
d) wobei weiters die dritte und die vierte lastfühlende Druckwaage ein von der Arbeitshydraulik ausgesandtes drittes Lastfühlsignal und ein dem Druck an einer Stelle zwischen der zweiten und der dritten Druckwaage entsprechendes Drucksignal gegeneinander abwiegen (Anspruch 6). Die Schmierung des Getriebes erfolgt dann über das Rücklauföl der Arbeitshydraulik.

In Weiterbildung dieser Ausführungsform kann der Rücklauf der Arbeitshydraulik über ein Druckbegrenzungsventil und ein Rückschlagventil mit der zweiten Druckleitung an einer Stelle stromabwärts der vierten Druckwaage verbunden sein (Anspruch 7). Dadurch entsteht im Rücklauf der Arbeitshydraulik nur dann ein Gegendruck, wenn das Überschußöl der zweiten und der dritten Pumpe nicht ausreicht, um den Schmierdruck aufrechtzuerhalten. Das kommt aber praktisch nie vor. Dazu muß das Überdruckventil ausreichend dimensioniert sein. Gegendruck in der Arbeitshydraulik kann im Falle eines Hubwerkes zu unerwünschten Bewegungen führen.

In einer anderen Ausführungsform sind zusätzlich noch eine vierte und eine fünfte Verdrängungspumpe konstanten Fördervolumens vorgesehen:
a) wovon die vierte Verdrängungspumpe über eine sechste Druckleitung mit einer fünften lastfühlenden Druckwaage im Nebenschluß eine Arbeitshydraulik versorgt, und
b) wovon die fünfte Verdrängungspumpe über eine siebente Druckleitung über eine sechste lastfühlende Druckwaage, von dieser gesteuert, entweder über ein Rückschlagventil mit der sechsten Druckleitung oder mit dem Rückfluß verbunden ist.
c) wobei weiters die fünfte und die sechste lastfühlende Druckwaage ein von der Arbeitshydraulik ausgesandtes viertes Lastfühlsignal und ein dem Druck in der sechsten Druckleitung stromabwärts der fünften Druckwaage entsprechendes Drucksignal gegeneinander abwiegen (Anspruch 8).
Dabei kann die dritte Pumpe unterbleiben. Dann ist die Arbeitshydraulik von der restlichen Hydraulik getrennt, bei voller Wahrung der geringen Verlustleistungen, wenn die vierte Verdrängungspumpe für ein wesentlich kleineres Fördervolumen als die fünfte Verdrängungspumpe und die sechste Druckwaage für eine große Durchflußmenge ausgelegt ist (Anspruch 9).

Im Folgenden wird die Erfindung anhand von Abbildungen beschrieben und erläutert. Es stellen dar:
- Fig. 1:: Ein erstes Ausführungsbeispiel eines erfindungsgemäßen Systemes,
- Fig.2:: ein zweites Ausführungsbeispiel eines erfindungsgemäßen Systemes,
- Fig.3:: ein drittes Ausführungsbeispiel eines erfindungsgemäßen Systemes.

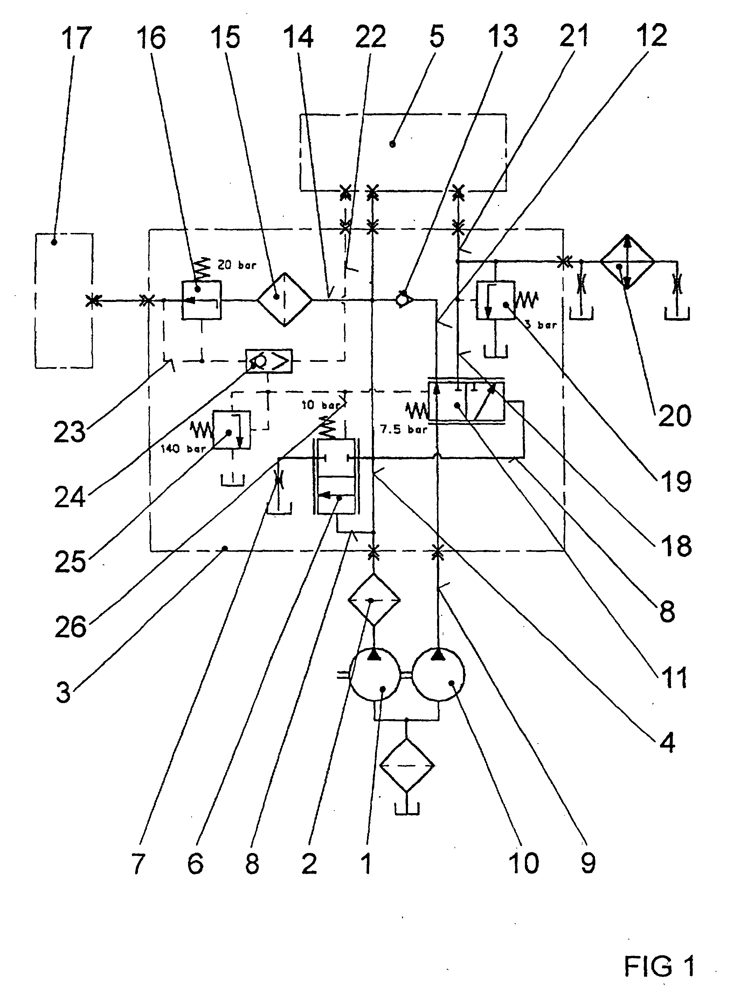

In Fig. 1 saugt die erste Pumpe 1, eine Verdrängungspumpe, bei konstanter Drehzahl konstanten Fördervolumens über ein Saugsieb aus einem nicht bezeichneten Sumpf Öl an und fördert es über ein Hauptstromfilter 2 in einen nur angedeuteten Ventilblock 3, und zwar in eine erste Druckleitung 4, welche zur Lenkhydraulik 5 führt. Im NebenSchluß ist eine erste lastfühlende Druckwaage 6 vorgesehen, die vom Zwei-Wege-Typ ist. Sie ist stufenlos verstellbar zwischen einer ganz geschlossenen Stellung und geöffneten Stellung, in der sie den Weg zu einem Rücklauf 7 freigibt. Der ersten Druckwaage 6 wird ein erstes Drucksignal 8 zugeführt, das den Druck in der ersten Druckleitung 4 angibt.

Eine zweite Pumpe 10, ebenfalls eine Verdrängungspumpe konstanten Fördervolumens, fördert Drucköl in eine zweite Druckleitung 9 zu einer zweiten lastfühlenden Druckwaage 11, die vom Drei-Wege-Typ ist. Diese ist im Hauptschluß angeordnet und öffnet stufenlos zweierlei Wege, entweder über eine Verbindungsleitung 12 und ein Rückschlagventil 13 zur ersten Druckleitung 4 oder in eine Fortsetzung 18 der zweiten Druckleitung 9. Von der ersten Druckleitung 4 zweigt eine dritte Druckleitung 14 ab, die über ein Feinfilter 15 und ein Druckminderventil 16 eine Getriebesteuerung 17 versorgt. Das Druckminderventil 16 begrenzt den Getriebesteuerdruck. Die Fortsetzung 18 der zweiten Druckleitung 9 führt zur Schmierung und Kühlung 20 eines nur angedeuteten Getriebes und ist über ein erstes Druckbegrenzungsventil 19 abgesichert. Ausserdem ist der Rücklauf der Lenkhydraulik über die Leitung 21 mit dem Getriebe 20 verbunden.

Zur Steuerung der Druckwaagen 6,11 wird ein erstes Lastfühlsignal 22 von der hydrostatischen Lenkung und ein zweites Lastfühlsignal 23 von der Getriebesteuerung übernommen und über ein Wechselventil 24 und ein im Nebenschluß angeordnetes zweites Druckbegrenzungsventil 25, es ist ein Vorsteuerventil, das ausgewählte Lastfühlsignal 26 jeweils der einen Seite der beiden lastfühlenden Druckwaagen 6,11 zugeführt.

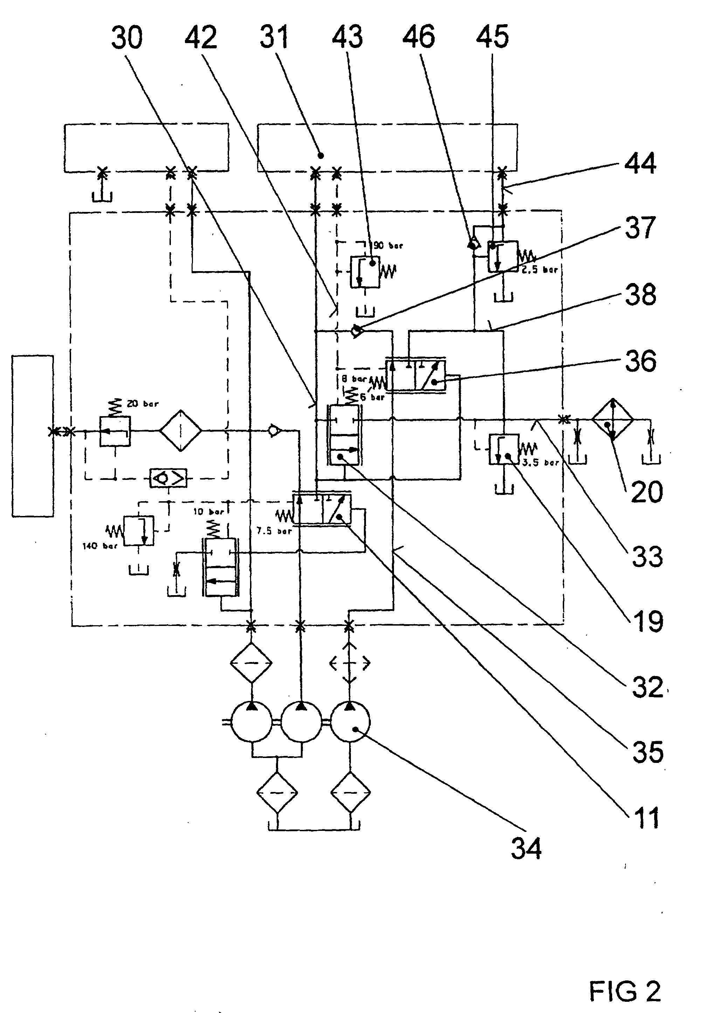

In Fig.2 sind gleiche Elemente mit den gleichen Bezugszeichen versehen. An die zweite lastfühlende Druckwaage schließt hier eine vierte Druckleitung 30 an, die zu einer Arbeitshydraulik 31 führt. Im Nebenschluß zu dieser vierten Druckleitung ist eine dritte lastfühlende Druckwaage 32 vorgesehen, die sich stufenlos zwischen einer Sperrstellung und einer Offenstellung verstellt, in der sie Öl in eine Schmierleitung 33 liefert, die wieder zum Getriebe führt. An einer Seite dieser dritten Druckwaage 33 greift der Druck in der vierten Druckleitung 30 an. Eine dritte Verdrängungspumpe konstanten Fördervolumens 34 fördert Drucköl durch eine fünfte Druckleitung 35 zu einer vierten lastfühlenden Druckwaage 36, die den Ölstrom entweder über ein Rückschlagventil 37 zur vierten Druckleitung 30 führt oder, mit allen möglichen Zwischenstellungen, über eine zweite Schmierleitung 38 zur ersten Schmierleitung 33.

Die dritte Druckwaage 32 und die vierte Druckwaage 36 werden auf der anderen Seite von einem dritten Lastfühlsignal 42 beaufschlagt, das an der lastfühlenden Arbeitshydraulik abgenommen wird, wobei wieder ein Druckbegrenzungsventil 43 im Nebenschluß vorgesehen ist. Der Rücklauf 44 der Arbeitshydraulik führt über ein viertes Druckbegrenzungsventil 45 mit einem parallel geschalteten Rückschlagventil 46 zur zweiten Schmierleitung 38. Durch diese Kombination aus Druckbegrenzungsventil und Rückschlagventil wird ein Gegendruck im Rücklauf weitgehend vermieden. Ein solcher könnte sich in der Arbeitshydraulik störend bemerkbar machen.

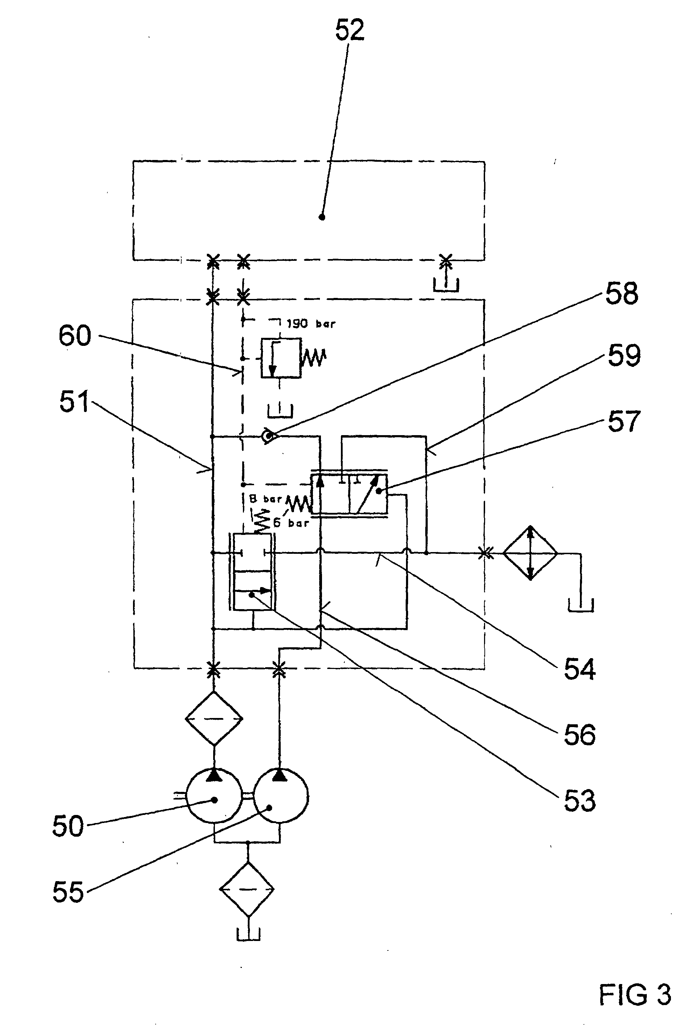

Fig.3 kann an die Fig. 1 angefügt werden und zeigt die Versorgung einer Arbeitshydraulik, deren Ölkreislauf von dem der Fig. 1 getrennt sein kann. Die vierte Verdrängungspumpe konstanten Fördervolumens 50 versorgt über eine sechste Druckleitung 51 eine Arbeitshydraulik 52. Sie ist im Nebenschluß mit einer fünften lastfühlenden Druckwaage 53 verbunden, die entweder sperrt oder, mit Zwischenstadien, den Weg zu einem Rücklauf 54 freigibt. Eine fünfte Verdrängungspumpe konstanten Fördervolumens 55 speist eine siebente Druckleitung 56, die über eine sechste lastfühlende Druckwaage 57 entweder über ein Rückschlagventil 58 mit der sechsten Druckleitung 51 verbunden ist, oder - mit Zwischenstufen - mit einer Rücklaufleitung 59. Die Gegenkräfte auf die beiden Druckwaagen 53,57 sind jeweils ein viertes Lastfühlsignal 60.

## Patentansprüche

1. Hydraulisches System für Ackerschlepper und selbstfahrende Arbeitsmaschinen mit einer ersten (1) und einer zweiten (10) Verdrängungspumpe (1,10) konstanten Fördervolumens,
a) wovon die erste über eine erste Druckleitung (4) eine Lenkhydraulik (5) versorgt, wobei der Druck in der ersten Druckleitung (4) über eine im Nebenschluß geschaltete erste lastfühlende Druckwaage (6) gesteuert ist, und
b) wovon die zweite Verdrängungspumpe (10) über eine zweite Druckleitung (9) weitere Verbraucher versorgt, wobei in der zweiten Druckleitung eine im Hauptschluß geschaltete zweite lastfühlende Druckwaage (11) vorgesehen ist, und
c) wobei weiters die beiden lastfühlenden Druckwaagen (6,11) ein von der Lenkhydraulik (5) ausgesandtes erstes Lastfühlsignal (22) und ein dem Druck stromabwärts der ersten Verdrängungspumpe (1) entsprechendes Drucksignal gegeneinander abwiegen,
d) und wobei die zweite Druckwaage (11) bei Überherrschen des ersten Lastfühlsignales (22) die zweite Druckleitung (9) mit der ersten (4) verbindet,
**dadurch gekennzeichnet, daß**
e) von der ersten Druckleitung (4) eine dritte Druckleitung (14) zur Steuerung (17) des Fahrgetriebes abzweigt, sodaß letztere parallel zur Lenkhydraulik (5) versorgt ist,
f) die zweite Druckleitung (9) das Fahrgetriebe mit Schmier- und Kühlöl versorgt,
g) der Rücklauf (21) der Lenkhydraulik (5) stromabwärts der zweiten Druckwaage (11) in die zweite Druckleitung (9) mündet.

2. Hydraulisches System nach Anspruch 1, **dadurch gekennzeichnet, daß** die erste Verdrängungspumpe (1) für ein wesentlich kleineres Fördervolumen als die zweite Verdrängungspuinpe (10) und daß die zweite Druckwaage (11) für eine große Durchflußmenge ausgelegt ist.

3. Hydraulisches System nach Anspruch 1, **dadurch gekennzeichnet, daß** nebst dem von der Lenkhydraulik (5) ausgesandten ersten Lastfühlsignal (22) ein dem Druck in der dritten Druckleitung (14) entsprechendes zweites Lastfühlsignal (23) über ein Wechselventil (24) zumindest einer der beiden Druckwaagen (6,11) zugeleitet wird.

4. Hydraulisches System nach Anspruch 2, **dadurch gekennzeichnet, daß** in der ersten Druckleitung (4) anschließend an dic erste Verdrängungspumpe (1) ein Ölfilter (2) vorgesehen ist.

5. Hydraulisches System nach Anspruch 1, **dadurch gekennzeichnet, daß** in der dritten Druckleitung (14) zwischen deren Abzweigung von der ersten Druckleitung (4) und der Stelle an der das zweite Lastfühlsignal (23) abgenommen wird, ein Feinstfilter (15) und ein Druckminderventil (16) angeordnet sind.

6. Hydraulisches System nach Anspruch 1, **dadurch gekennzeichnet, daß**
a) von der zweiten Druckleitung (9) stromabwärts der zweiten Druckwaage (11) eine vierte Druckleitung (30) abzweigt, die eine Arbeitshydraulik (31) versorgt,
b) in der zweiten Druckleitung (9) stromabwärts der Abzweigung der vierten Druckleitung (30) eine dritte lastfühlende Druckwaage (32) vorgesehen ist,
c) eine dritte Verdrängungspumpe (34) konstanten Fördervolumens über eine fünfte Druckleitung (35) und eine vierte lastfühlende Druckwaage (36), von dieser gesteuert, entweder mit der vierten Druckleitung (30) oder mit der zweiten Schmierleitung (38) verbindbar ist,
d) wobei weiters die dritte und die vierte lastfühlende Druckwaage (32,36) ein von der Arbeitshydraulik (31) ausgesandtes drittes Lastfühlsignal (42) und ein dem Druck an einer Stelle zwischen der zweiten und der dritten Druckwaage (32,36) entsprechendes Drucksignal gegeneinander abwiegen.

7. Hydraulisches System nach Anspruch 6, **dadurch gekennzeichnet, daß** der Rücklauf (44) der Arbeitshydraulik (31) über ein Druckbegrenzungsventil (45) und ein Rückschlagventil (46) mit der zweiten Schmierleitung (38) an einer Stelle stromabwärts der vierten Druckwaage (36) verbunden ist.

8. Hydraulisches System nach Anspruch 1, **dadurch gekennzeichnet, daß** zusätzlich noch eine vierte (50) und eine fünfte Verdrängungspumpe (55) konstanten Fördervolumens vorgesehen sind,
a) wovon die vierte Verdrängungspumpe (50) über eine sechste Druckleitung (51) mit einer fünften lastfühlenden Druckwaage (53) im Nebenschluß eine Arbeitshydraulik (52) versorgt, und
b) wovon die fünfte Verdrängungspumpe (55) über eine siebente Druckleitung (56) über eine sechste lastfühlende Druckwaage (57), von dieser gesteuert, entweder über ein Rückschlagventil (58) mit der sechsten Druckleitung (51) oder mit dem Rückfluß (59) verbunden ist,
c) wobei weiters die fünfte (53) und die sechste lastfühlende Druckwaage (57) ein von der Arbeitshydraulik (52) ausgesandtes viertes Lastfühlsignal (60) und ein dem Druck in der sechsten Druckleitung (51) stromabwärts der fünften Druckwaage (53) entsprechendes Drucksignal gegeneinander abwiegen.

9. Hydraulisches System nach Anspruch 8, **dadurch gekennzeichnet, daß** die vierte Verdrängungspumpe (50) für ein wesentlich kleineres Fördervolumen als die fünfte Verdrängungspumpe (55) und daß die sechste Druckwaage (57) für eine große Durchflußmenge ausgelegt ist.

## Claims

1. Hydraulic system for agricultural tractors and self-propelled working machines with a first (1) and a second (10) displacement pump (1, 10) of constant displacement volume,
a) of which the first supplies a steering hydraulic circuit (5) via a first pressure line (4), the pressure in the first pressure line (4) being controlled via a first load-sensing pressure balance (6) connected in parallel, and
b) of which the second displacement pump (10) supplies further loads via a second pressure line (9), a second load-sensing pressure balance (11), connected in series, being provided in the second pressure line, and
c) the two load-sensing pressure balances (6, 11) furthermore weighing against one another a first load-sensing signal (22) emitted by the steering hydraulic circuit (5) and a pressure signal corresponding to the pressure downstream from the first displacement pump (1),
d) and the second pressure balance (11) connecting the second pressure line (9) to the first (4) if the first load-sensing signal (22) is prevalent,
**characterized in that**
e) from the first pressure line (4), a third pressure line (14) branches off to the control system (17) of the driving transmission, so that the control system is supplied in parallel to the steering hydraulic circuit (5),
f) the second pressure line (9) supplies the driving transmission with lubricating and cooling oil,
g) the return (21) of the steering hydraulic circuit (5) opens into the second pressure line (9), downstream from the second pressure balance (11).

2. Hydraulic system according to Claim 1, **characterized in that** the first displacement pump (1) is designed for a substantially lesser displacement volume than the second displacement pump (10) and **in that** the second pressure balance (11) is designed for a large flow rate.

3. Hydraulic system according to Claim 1, **characterized in that**, in addition to the first load-sensing signal (22) emitted by the steering hydraulic circuit (5), a second load-sensing signal (23), corresponding to the pressure in the third pressure line (14), is delivered to at least one of the two pressure balances (6, 11) via a two-way valve (24).

4. Hydraulic system according to Claim 2, **characterized in that** an oil filter (2) is provided in the first pressure line (4), adjacent to the first displacement pump (1).

5. Hydraulic system according to Claim 1, **characterized in that** an ultra-fine filter (15) and a pressure-reducing valve (16) are disposed in the third pressure line (14), between its branching-off from the first pressure line (4) and the point at which the second load-sensing signal (23) is taken off.

6. Hydraulic system according to Claim 1, **characterized in that**
a) a fourth pressure line (30) which supplies a working hydraulic circuit (31) branches off from the second pressure line (9), downstream from the second pressure balance (11),
b) a third load-sensing pressure balance (32) is provided in the second pressure line (9), downstream from the branching-off of the fourth pressure line (30),
c) a third displacement pump (34) of constant displacement volume can be connected either to the fourth pressure line (30) or to the second lubrication line (38) via a fifth pressure line (35) and a fourth load-sending pressure balance (36) controlled by the latter,
d) the third and the fourth load-sensing pressure balances (32, 36) furthermore weighing against one another a third load-sensing signal (42) emitted by the working hydraulic circuit (31) and a pressure signal corresponding to the pressure at a point between the second and the third pressure balance (32, 36).

7. Hydraulic system according to Claim 6, **characterized in that** the return (44) of the working hydraulic circuit (31) is connected to the second lubrication line (38), at a point downstream from the fourth pressure balance (36), via a pressure-limiting valve (45) and a non-return valve (46).

8. Hydraulic system according to Claim 1, **characterized in that**, in addition, a fourth (50) and a fifth displacement pump (55) of constant displacement volume are provided,
a) of which the fourth displacement pump (50) supplies a working hydraulic circuit (52) via a sixth pressure line (51) with a fifth load-sensing pressure balance (53) connected in parallel, and
b) of which the fifth displacement pump (55), via a seventh pressure line (56) via a sixth load-sensing pressure balance (57), controlled by the latter, is connected either to the sixth pressure line (51), via a non-return valve (58), or to the return (59),
c) the fifth (53) and the sixth load-sensing pressure balances (57) furthermore weighing against one another a fourth load-sensing signal (60) emitted by the working hydraulic circuit (52) and a pressure signal corresponding to the pressure in the sixth pressure line (51) downstream from the fifth pressure balance (53).

9. Hydraulic system according to Claim 8, **characterized in that** the fourth displacement pump (50) is designed for a substantially lesser displacement volume than the fifth displacement pump (55) and **in that** the sixth pressure balance (57) is designed for a large flow rate.

## Revendications

1. Système hydraulique pour tracteurs agricoles et engins automoteurs comprenant une première (1) et une deuxième (10) pompe volumétrique (1, 10) à volume de refoulement constant,
a) dont la première alimente un dispositif hydraulique de direction (5) par une première conduite de pression (4), la pression présente dans la première conduite de pression (4) étant commandée par l'intermédiaire d'une première balance de pression (6) sensible à la charge, connectée en dérivation,
b) dont la deuxième pompe volumétrique (10) alimente d'autres appareils consommateurs par l'intermédiaire d'une deuxième conduite de pression (9), une deuxième balance de pression (11) sensible à la charge étant prévue, connectée en série, dans la deuxième conduite de pression, et
c) dans lequel, en outre, les deux balances de pression (6,11) sensibles à la charge dosent entre eux un premier signal sensible à la charge (22) émis par le dispositif hydraulique de direction (5) et un signal de pression correspondant à la pression en aval de la première pompe volumétrique (1),
d) et dans lequel la deuxième balance de pression (11) relie la deuxième conduite de pression (9) à la première (4) lorsque le premier signal sensible à la charge (22) est prédominant,
**caractérisé en ce que**
e) de la première conduite de pression (4), est dérivée une troisième conduite de pression (14) destinée à la commande (17) du train de roulement, de sorte que cette dernière est alimentée en parallèle avec le dispositif hydraulique de direction (5),
f) la deuxième conduite de pression (9) alimente le train de roulement en huile de lubrification et de refroidissement,
g) le retour (21) du dispositif hydraulique de direction (5) débouche dans la deuxième conduite de pression (9) en aval de la deuxième balance de pression (11).

2. Système hydraulique selon la revendication 1, **caractérisé en ce que** la première pompe volumétrique (1) est construite pour un beaucoup plus petit volume de refoulement que la deuxième pompe volumétrique (10), et **en ce que** la balance de pression (11) est construite pour un grand débit de passage.

3. Système hydraulique selon la revendication 1, **caractérisé en ce qu'**en plus du premier signal sensible à la charge (22) émis par le dispositif hydraulique de direction (5), un deuxième signal sensible à la charge (23) correspondant à la pression régnant dans la troisième conduite de pression (14) est transmis au moins à une des deux balances de pression (6, 11) par l'intermédiaire d'une valve d'inversion (24).

4. Système hydraulique selon la revendication 2, **caractérisé en ce qu'**un filtre à huile (2) est prévu, dans la première conduite de pression (4) à la suite de la première pompe volumétrique (1).

5. Système hydraulique selon la revendication 1, **caractérisé en ce qu'**un filtre à particules fines (15) et une valve de réduction de pression (16) sont intercalés dans la troisième conduite de pression (14) entre son point de dérivation sur la première conduite de pression (4) et l'endroit où le deuxième signal sensible à la charge (23) est prélevé.

6. Système hydraulique selon la revendication 1, **caractérisé en ce que**
a) une quatrième conduite de pression (30), qui alimente un dispositif hydraulique de travail (31), est dérivée de la deuxième conduite de pression (9) en aval de la deuxième balance de pression (11),
b) une troisième balance de pression (32), sensible à la charge, est prévue dans la deuxième conduite de pression (9) en aval du point de dérivation de la quatrième conduite de pression (30),
c) une troisième pompe volumétrique (34) à volume de refoulement constant peut être reliée, par l'intermédiaire d'une cinquième conduite de pression (35) et d'une quatrième balance de pression (36) sensible à la charge, et sous la commande de celle-ci, soit à la quatrième conduite de pression (30), soit à la deuxième conduite de lubrification (38),
d) cependant qu'en outre, la troisième et la quatrième balance de pression sensible à la charge (32, 36) dosent entre elles un troisième signal sensible à la charge (42) émis par le dispositif hydraulique de travail (31) et un signal de pression qui correspond à la pression régnant à un endroit compris entre les deuxième et troisième balances de pression (32, 36).

7. Système hydraulique selon la revendication 6, **caractérisé en ce que** le retour (44) du dispositif hydraulique de travail (31) est relié à la deuxième conduite de lubrification (38), à un endroit situé en aval de la quatrième balance de pression (36), par l'intermédiaire d'une valve de limitation de pression (45) et d'un clapet antiretour (46).

8. Système hydraulique selon la revendication 1, **caractérisé en ce qu'**il est encore prévu en plus de la quatrième (50) et de la cinquième pompe volumétrique (55) à volume de refoulement constant,
a) que la quatrième pompe volumétrique (50) alimente un dispositif hydraulique de travail (52) en parallèle par l'intermédiaire d'un sixième conduite de pression (51) pourvue d'une cinquième balance de pression (53) sensible à la charge et
b) que la cinquième pompe volumétrique (55) est reliée, par l'intermédiaire d'une septième conduite de pression (56), par l'intermédiaire d'une sixième balance de pression (57) sensible à la charge, et sous la commande de cette dernière, soit à la sixième conduite de pression (51) par l'intermédiaire d'un clapet antiretour (58), soit au retour (59),
c) cependant qu'en outre, la cinquième (53) et la sixième (57) balance de pression sensible à la charge dosent entre elles un quatrième signal sensible à la charge (60) émis par le dispositif hydraulique de travail (52) et un signal de pression correspondant à la pression régnant dans la sixième conduite de pression (51) en aval de la cinquième balance de pression (53).

9. Système hydraulique selon la revendication 8, **caractérisé en ce que** la quatrième pompe volumétrique (50) est construite pour un beaucoup plus petit volume de refoulement que la cinquième pompe volumétrique (55) et **en ce que** la sixième balance de pression (57) est construite pour un grand débit de passage.
